# EUROPÄISCHE PATENTANMELDUNG

(11) **EP 1 320 255 A1**
(43) Veröffentlichungstag der Anmeldung: **18.06.2003**
(21) Anmeldenummer: 01129324.8
(22) Anmeldetag: 14.12.2001
(51) Int. Cl.: H04N 5/00, H04N 7/16

(54) **Digitale Freigabevorrichtung**

(71) Anmelder: Beta Research GmbH, 85774 Unterföhring (DE)
(72) Erfinder: Boje, Markus, 81675 München (DE); Proske, Wolfram, 84424 Isen (DE)
(74) Vertreter: Heselberger, Johannes

(57) **Zusammenfassung**

Freigabevorrichtung (2) zur Freigabe eines digitalen Dienstes an einen Dienstabnehmer, wobei auf einem Kanal ein erstes Datensignal mit einer Information über den digitalen Dienst und zweites Datensignal mit einem Inhalt des digitalen Dienstes von einem Dienstanbieter an die Freigabevorrichtung (2) übertragen werden, mit einem Eingang (6) für das erste Datensignal und für das zweite Datensignal, einer Wähleinrichtung (8) zum Anwählen des Kanals, einer Kontrolleinrichtung (10), die anhand der mittels des ersten Datensignals übertragenen Information feststellt, ob der Dienstabnehmer zur Nutzung des digitalen Dienstes berechtigt ist, der auf dem angewählten Kanal übertragen wird, einem mit der Kontrolleinrichtung (10) verbundenen Datenausgang (14) zur Ausgabe der Daten des Dienstes für den Dienstabnehmer, wobei die Freigabevorrichtung (2) eine Speichereinrichtung (18) zum Speichern des ersten Datensignals des digitalen Dienstes aufweist, aus der die Kontrolleinrichtung (10) das gespeicherte erste Datensignal ausliest, wenn der Dienstabnehmer den Kanal anwählt, auf dem der digitale Dienst übertragen wird.

## Beschreibung

Die Erfindung betrifft eine Freigabevorrichtung und ein Verfahren zur Freigabe eines digitalen Dienstes an einen Dienstabnehmer. Auf einem Kanal werden ein erstes Datensignal mit einer Information über den digitalen Dienst und ein zweites Datensignal mit einem Inhalt des digitalen Dienstes von einem Dienstanbieter an die Freigabevorrichtung übertragen. Die Freigabevorrichtung weist einen Eingang für das erste Datensignal und für das zweite Datensignal auf. Ferner weist die Freigabevorrichtung eine Wähleinrichtung zum Anwählen des Kanals sowie eine Kontrolleinrichtung auf. Die Kontrolleinrichtung stellt anhand der mittels des ersten Datensignals übertragenen Information fest, ob der Dienstabnehmer zur Nutzung des digitalen Dienstes berechtigt ist, der auf dem angewählten Kanal übertragen wird. Die Freigabevorrichtung weist ferner einen mit der Kontrolleinrichtung verbundenen Datenausgang zur Ausgabe der Daten des Dienstes für den Dienstabnehmer auf. Die Ausgabe erfolgt, falls der Dienstabnehmer zur Nutzung des Dienstes berechtigt ist.

Eine derartige Freigabevorrichtung ist als Dekodiergerät eines Abnehmers bekannt, das zum Entschlüsseln eines digitalen Fernsehprogrammes vorgesehen ist. Das digitale Fernsehprogramm wird im sogenannten Digital Video Broadcasting Standard von dem Anbieter des digitalen Fernsehprogrammes an das Dekodiergerät übertragen. Das digitale Fernsehprogramm beinhaltet eine Information über das Mindestalter, das der Abnehmer erreicht haben soll, um das Fernsehprogramm betrachten zu dürfen. Das Dekodiergerät weist einen Kartenleser zum Auslesen einer Speicherkarte des Abnehmers auf. Auf der Speicherkarte sind eine Identifikationsnummer des Abnehmers sowie personenbezogene Daten des Abnehmers gespeichert. Wenn der Abnehmer seine Speicherkarte in den Kartenleser einführt, liest der Kartenleser die Identifikationsnummer und die personenbezogenen Daten von der Speicherkarte. Das Dekodiergerät stellt die Identität des Abnehmers fest und ermittelt anhand der personenbezogenen Daten sein Alter. Sofern das Alter des Abnehmers das Mindestalter nicht unterschreitet und der Abnehmer auch im übrigen zur Inanspruchnahme des digitalen Fernsehprogrammes berechtigt ist, entschlüsselt das Dekodiergerät das auf dem angewählten Kanal übertragene digitale Fernsehprogramm.

Bei dem DVB Standard wird die Information über das Mindestalter in Abständen von zwei Sekunden übertragen. Beispielsweise folgt bei einem Übergang von einer jugendfreien Sendung zu einer Erwachsenensendung das Dekodiergerät innerhalb von zwei Sekunden der entsprechenden Änderung des Mindestalters, indem es die Information spätestens nach zwei Sekunden erhält und die Entschlüsselung des Programms einstellt, wenn es anhand der personenbezogenen Daten des Abnehmers ermittelt, dass das Alter des Abnehmers das Erwachsenenalter unterschreitet.

Wenn der Abnehmer von einem ersten Kanal auf einen zweiten Kanal umschaltet, so bleibt das auf dem zweiten Kanal übertragene digitale Fernsehprogramm zunächst verschlüsselt, bis innerhalb von zwei Sekunden die Information über das Mindestalter bei diesem Fernsehprogramm übertragen und festgestellt ist, dass der Abnehmer dieses Mindestalter nicht unterschreitet. Der Abnehmer sieht auf seinem Fernsehgerät während dieser Wartezeit ein schwarzes Bild und muß sich in Geduld fassen.

Eine erste Aufgabe der Erfindung besteht darin, die bekannte Freigabevorrichtung derart zu verbessern, dass die Wartezeit beim Umschalten verkürzt ist. Eine zweite Aufgabe der Erfindung besteht darin, ein Verfahren anzugeben, wonach die Wartezeit beim Umschalten verkürzt ist.

Die Erfindung löst die erste Aufgabe bei einer Freigabevorrichtung der eingangs genannten Art, dadurch dass die Freigabevorrichtung eine Speichereinrichtung zum Speichern des ersten Datensignals des digitalen Dienstes aufweist, aus der die Kontrolleinrichtung das gespeicherte erste Datensignal ausliest, wenn der Dienstabnehmer den Kanal anwählt, auf dem der digitale Dienst übertragen wird. Der Kanal kann als ein logischer Kanal ausgebildet sein, der mehrere physische Kanäle für die Übertragung benötigt. Alternativ kann der Kanal als ein physischer Kanal ausgebildet sein, der mehrere logische Kanäle aufweist. Bei einer besonders einfachen Ausführungsform ist die Wähleinrichtung als "An/Aus"-Schalter ausgebildet, so daß nur ein digitaler Dienst, der auf einem vorgegebenen Kanal übertragen wird, anwählbar ist.

Bei einer Ausführungsform unterdrückt die Kontrolleinrichtung eine Übergabe des zweiten Datensignals mit dem Inhalt des digitalen Dienstes an den Datenausgang, falls sie keine Berechtigung des Dienstabnehmers zur Nutzung des Dienstes feststellt. Alternativ stellt die Kontrolleinrichtung am Datenausgang der Freigabevorrichtung ein Sperrsignal bereit, wonach der Dienst nicht zur Inanspruchnahme vorgesehen ist. Wenn beispielsweise ein Fernsehgerät an den Datenausgang angeschlossen ist, wird das zweite Datensignal, etwa ein MPEG Datenstrom, zwar an das Fernsehgerät übergeben, aber wegen des Sperrsignals nicht durchgeschliffen, so dass es nicht zu einer Darstellung des Inhalts des zweiten Datensignal auf dem Bildschirm des Fernsehgeräts kommt. Eine Ausführungsform der erfindungsgemäßen Freigabevorrichtung ist als Zusatzgerät ausgebildet, das dazu vorgesehen ist, zwischen ein Dekodiergerät und ein Dienstwiedergabegerät wie etwa ein digitales Fernsehgerät geschaltet zu werden.

Wenn bei der erfindungsgemäßen Freigabevorrichtung das Datensignal mit der Information über denjenigen digitalen Dienst in der Speichereinrichtung gespeichert ist, den der Abnehmer anfordert, indem er den Übertragungskanal für diesen digitalen Dienst anwählt, dann liest die Kontrolleinrichtung das in der Speichereinrichtung gespeicherte Datensignal. Der Vorgang des Lesens erfolgt in aller Regel sehr schnell. Somit steht bei der erfindungsgemäßen Freigabevorrichtung die Information über den digitalen Dienst praktisch schlagartig zur Verfügung, um anhand dieser Information festzustellen, ob der Abnehmer zur Nutzung des angeforderten digitalen Dienstes befugt ist. Dies hat den Vorteil, dass in der Praxis beim Umschalten von einem Kanal auf den nächsten die Wartezeit bis zur Inanspruchnahme des auf dem nächsten Kanal übertragenen Dienstes erheblich verkürzt ist.

Eine bevorzugte Ausführungsform der erfindungsgemäßen Freigabevorrichtung weist eine Entschlüsselungseinrichtung auf, die mit dem Datensignaleingang, mit der Wähleinrichtung und mit der Kontrolleinrichtung verbunden ist und die das verschlüsselte zweite Datensignal des gewählten Kanals entschlüsselt, wenn die Kontrolleinrichtung feststellt, dass der Dienstabnehmer zur Nutzung des digitalen Dienstes berechtigt ist, der auf dem angewählten Kanal übertragen wird. Die Bedeutung von "verschlüsselt" besteht darin, dass ein Inhalt des verschlüsselten Datensignals nicht frei zugänglich ist. Insbesondere bedarf es einer "Entschlüsselung", d. h. eines bestimmten Vorganges, um den Inhalt das Datensignals zu entsperren und einer Erfassung zugänglich zu machen. Somit steht der Begriff "verschlüsselte Datensignale" für solche Datensignale, deren Inhalt nicht frei zugänglich ist, sondern in der vorgenannten Weise entsperrt werden muß.

Bei einer Ausführungsform genügt zur Entschlüsselung die Feststellung, dass der Dienstabnehmer grundsätzlich zur Inanspruchnahme des Dienstes berechtigt ist, weil er beispielsweise auf den Dienst abonniert ist. Falls der Dienstabnehmer gleichwohl ausnahmsweise zur Inanspruchnahme des auf dem angewählten Kanal übertragenen Dienstes nicht berechtigt ist, etwa weil er ein erforderliches Mindestalter nicht erreicht, entschlüsselt die Entschlüsselungseinrichtung zwar das zweite Datensignal, unterdrückt jedoch die Übergabe des entschlüsselten Signals an den Datenausgang oder stellt am Datenausgang ein Sperrsignal bereit wie oben bereits beschrieben ist.

Bei einer Ausführungsform der Erfindung werden die ersten Datensignale des digitalen Dienstes regelmäßig in der Speichereinrichtung gespeichert, um eine möglichst aktuelle Information in der Speichereinrichtung vorzuhalten. Bevorzugt wird jeweils das zuletzt übertragene erste Datensignal des digitalen Dienstes in der Speichereinrichtung gespeichert, sofern der Kanal angewählt ist, auf dem der in Anspruch genommene digitale Dienst übertragen wird. Dies hat den Vorteil, dass das gespeicherte erste Datensignal möglichst oft aktualisiert wird, solange der Abnehmer den zugeordneten digitalen Dienst in Anspruch nimmt.

Besonders bevorzugt wird das zuletzt übertragene erste Datensignal des digitalen Dienstes in der Speichereinrichtung gespeichert, sofern der Dienstabnehmer grundsätzlich zur Nutzung des digitalen Dienstes berechtigt ist. Dabei kommt es nicht darauf an, ob der Dienstabnehmer den Dienst gerade in Anspruch nimmt. Die Freigabevorrichtung speichert vielmehr parallel für sämtliche Dienste desselben Anbieters, zu deren Inanspruchnahme der Abnehmer berechtigt ist, die zuletzt übertragenen ersten Datensignale. Bei dieser Ausführungsform wird deshalb jedes gespeicherte erste Datensignal dieser Dienste desselben Anbieters besonders oft aktualisiert.

Ganz besonders bevorzugt ist eine Ausführungsform der Erfindung, bei der nach jeder Übertragung des ersten Datensignals an die Freigabevorrichtung dieses erste Datensignal in der Speichereinrichtung gespeichert wird. Dabei kommt es nicht darauf an, dass der Abnehmer zur Nutzung des digitalen Dienstes berechtigt ist. Bei dieser Ausführungsform wird das gespeicherte erste Datensignal somit laufend aktualisiert, so dass ein Höchstmaß an Flexibilität gegeben ist. So steht etwa im Falle einer Änderung des Dienstabnehmers bzw. einer Änderung der Identifikationsnummer sofort die Information für alle Dienste zur Verfügung zu deren Inanspruchnahme der neue Dienstanbieter berechtigt ist.

Bei einer weiteren Ausführungsform überprüft die Kontrolleinrichtung die festgestellte Berechtigung zur Inanspruchnahme unmittelbar nach jeder Übertragung des ersten Datensignals anhand der Information, die mittels dieses ersten Datensignals übertragen ist. Diese Ausführungsform ist vorteilhaft, weil die übertragene Information unmittelbar von der Kontrolleinrichtung ausgewertet wird, ohne zuvor in der Speichereinrichtung gespeichert zu werden. Bei dieser Ausführungsform wird das erste Datensignal nur dann aus der Speichereinrichtung ausgelesen, wenn ein aktuelles erstes Datensignal noch nicht übertragen ist. Nachdem ein aktuelles erstes Datensignal an die Freigabevorrichtung übertragen ist, werden dieses sowie nachfolgende erste Datensignale zur Auswertung unmittelbar an die Kontrolleinrichtung geleitet. Bei dieser Ausführungsform ist gewährleistet, dass ggf. die Entschlüsselung des zweiten Datensignals des in Anspruch genommenen Dienst möglichst schnell abgebrochen wird, wenn die übertragene Information ergibt, dass der Dienstabnehmer nicht länger zur Inanspruchnahme des zugeordneten digitalen Dienstes befugt ist. Zusätzlich werden - wie oben beschrieben - diese ersten Datensignale gespeichert, um erforderlichenfalls abrufbar zu sein.

Bei einer Ausführungsform weist das erste Datensignal eine Jugendschutzinformation auf, insbesondere ein Mindestalter, das der Dienstab-nehmer erreicht haben soll, um zur Inanspruchnahme des Dienstes befugt zu sein.

Die Erfindung löst die zweite Aufgabe mittels eines Verfahrens zur Freigabe eines digitalen Dienstes an einen Dienstabnehmer, mit den Schritten:
- Übertragen, auf einem Kanal, eines ersten Datensignals mit einer Information über den digitalen Dienst und eines zweiten Datensignals mit einem Inhalt des digitalen Dienstes von einem Dienstanbieter an eine Freigabevorrichtung,
- Anwählen des Kanals,
- Feststellen anhand der mittels des ersten Datensignals übertragenen Information, ob der Dienstabnehmer zur Nutzung des digitalen Dienstes berechtigt ist, der auf dem angewählten Kanal übertragen wird,
- Speichern des ersten Datensignals des digitalen Dienstes in einer Speichereinrichtung,
- Auslesen des gespeicherten ersten Datensignals aus der Speichereinrichtung, wenn der Dienstabnehmer den Kanal anwählt, auf dem der digitale Dienst übertragen wird, und
- Ausgeben der Daten des Dienstes für den Dienstabnehmer, falls der Dienstabnehmer zur Nutzung des Dienstes berechtigt ist.

Bei diesem Verfahren ist eine Wartezeit beim Umschalten von einem Kanal auf einen nächsten Kanal besonders kurz. Insbesondere kann die Wartezeit unterhalb einer Wahrnehmungsschwelle realisiert werden, so dass der Abnehmer praktisch nicht wartet, bis er den geforderten Dienst in Anspruch nimmt.

Bevorzugt ist eine Ausführungsform des erfindungsgemäßen Verfahrens, mit dem Schritt:
- falls das zweite Datensignal verschlüsselt ist, Entschlüsseln des verschlüsselten zweiten Datensignals des gewählten Kanals, wenn die Kontrolleinrichtung feststellt, dass der Dienstabnehmer zur Nutzung des digitalen Dienstes berechtigt ist, der auf dem gewählten Kanal übertragen wird.

Bei einer Ausführungsform des erfindungsgemäßen Verfahrens wird das zuletzt übertragene erste Datensignal des digitalen Dienstes in der Speichereinrichtung gespeichert, sofern der Kanal angewählt ist, auf dem der digitale Dienst in Anspruch genommen wird. Bei einer bevorzugten Ausführungsform wird das zuletzt übertragene erste Datensignal des digitalen Dienstes in der Speichereinrichtung gespeichert, sofern der Dienstabnehmer grundsätzlich zur Nutzung des digitalen Dienstes berechtigt ist. Bei einer besonders bevorzugten Ausführungsform wird jedes erste Datensignal des digitalen Dienstes in der Speichereinrichtung nach jeder Übertragung an die Freigabevorrichtung gespeichert.

Bei einer Ausführungsform des erfindungsgemäßen Verfahrens die festgestellte Berechtigung unmittelbar nach jeder Übertragung des ersten Datensignals anhand der mittels dieses ersten Datensignals übertragenen Information überprüft.

Die Aufgaben der Erfindung werden ferner durch ein System zur Inanspruchnahme eines digitalen Dienstes durch einen Dienstabnehmer gelöst, mit einer Empfangseinrichtung zum Empfang eines ersten Datensignals mit einer Information über den digitalen Dienst, einem zweiten Datensignal mit einem Inhalt des digitalen Dienstes, der erfindungsgemäßen Freigabevorrichtung zur Freigabe des digitalen Dienstes an den Dienstabnehmer gemäß dem erfindungsgemäßen Verfahren, deren Eingang mit der Empfangseinrichtung zur Aufnahme des empfangenen ersten Datensignals und des empfangenen zweiten Datensignals verbunden ist, und einer Kommunikationeinrichtung, die mit dem Datenausgang der Freigabevorrichtung verbunden ist und die die ausgegebenen Daten des Dienstes zur Kommunikation des Inhalts des digitalen Dienstes an den Dienstabnehmer verarbeitet.

Nachfolgend wird ein Ausführungsbeispiel der Erfindung anhand der Figur näher erläutert. Es zeigt:

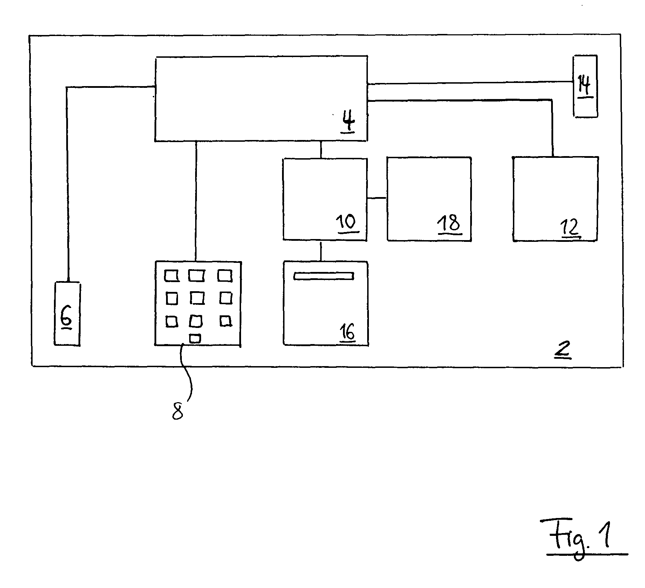

Fig. 1 eine schematische Darstellung eines erfindungsgemäßen Dekodiergerätes.

Das in Fig. 1 dargestellte Dekodiergerät 2 weist eine Entschlüsselungseinrichtung 4 auf. Die Entschlüsselungseinrichtung 4 ist mit einem Signaleingang 6, einer Eingabetastatur 8, einer Kontrolleinrichtung 10, einer Anzeige 12 und einem Datenausgang 14 verbunden. Die Kontrolleinrichtung 10 ist mit einem Kartenleser 16 verbunden. Ferner weist das Dekodiergerät 2 ein Speichermodul 18 auf, das mit der Kontrolleinrichtung 10 verbunden ist. An den Signaleingang 6 ist eine Empfangsantenne (nicht dargestellt) angeschlossen. An den Datenausgang 14 ist ein digitales Fernsehgerät (ebenfalls nicht dargestellt) angeschlossen. Bei einer nicht dargestellten Ausführungsform ist die Kontrolleinrichtung 10 zwischen dem Signaleingang 6 und die Entschlüsselungseinrichtung 4 geschaltet.

Zum Betrieb des Dekodiergeräts steckt ein Abnehmer eine Speicherkarte (nicht dargestellt) in den Kartenleser 16. Die Speicherkarte enthält Abnehmerinformationen über eine Berechtigung des Abnehmers zur Inanspruchnahme wenigstens eines Fernsehprogrammes. Bei einer alternativen Ausführungsform ist die Abnehmerinformation in einem gesicherten Bereich etwa einer Festplatte, eines sogenannten "Flash-memory" oder dergleichen Speichermediums gespeichert. Der Abnehmer wählt mittels der Eingabetastatur 8 das Fernsehprogramm durch Eingabe einer zugeordneten Kennziffer und die Kennziffer des gewählten Fernsehprogramms wird mittels der Anzeige 12 angezeigt.

Im Betrieb empfängt die Empfangsantenne ein Signal, das von einer Sendestation ausgestrahlt ist und mit dem gemäß dem Digital Video Broadcasting (DVB) Standard mindestens ein als Fernsehprogramm ausgebildeter Dienst an die Empfangsantenne übertragen wird. Das Signal weist eine Dienstinformation (Service Information - SI) und einen Programminhalt auf. Der Programminhalt umfasst die ausgestrahlte Sendung, d. h. Video- und Audiodaten der Sendung. Der Programminhalt ist verschlüsselt. Die Dienstinformation umfasst eine Beschreibung des Fernsehprogramms und wird in regelmäßigen Abständen-beispielsweise beträgt der Abstand vorliegend zwei Sekunden - ausgestrahlt. Diese Beschreibung enthält Angaben über die gegenwärtig im Rahmen des Fernsehprogramms ausgestrahlte Sendung wie etwa ihren Namen, den Beginn der ausgestrahlten Sendung und ihre Dauer. Insbesondere enthält die Dienstinformation einen Jugendschutzmarker, der signalisiert, ob die Sendung jugendfrei ist oder nicht. Bei einer Ausführungsform ist der Jugendschutzmarker für eine differenzierte Signalisierung vorgesehen, wonach verschiedene Freigabestufen (etwa frei ab sechs Jahren, ab zwölf Jahren, ab sechzehn Jahren oder ab dem achtzehnten Lebensjahr) signalisierbar sind.

Die Empfangsantenne leitet das empfangene Signal zum Signaleingang 6 des Dekodiergerätes 2. Von dem Signaleingang 6 gelangt das Signal zu der Entschlüsselungseinrichtung 4. Die Entschlüsselungseinrichtung 4 leitet die Dienstinformation des gewählten Fernsehprogramms an die Kontrolleinrichtung 10, die anhand dieser Dienstinformation in Verbindung mit den in der Speicherkarte gespeicherten Abnehmerinformationen ermittelt, ob der Abnehmer zur Inanspruchnahme des gewählten Fernsehprogrammes berechtigt ist. Bei einer Ausführungsform wird die Berechtigung des Abnehmers unter Zuhilfenahme einer persönlichen Identifikationsnummer (PIN) ermittelt. Bei einer Sperrung erscheint ein PIN-Dialog mit Aufforderung zur Eingabe der PIN auf der Anzeige 12 des Dekodiergeräts und/oder auf dem Bildschirm des digitalen Fernsehgeräts. Nach erfolgreicher Eingabe der PIN etwa mittels der Eingabetastatur 8 erfolgt eine Freigabe des Dienstes. Die Kontrolleinrichtung läßt beispielsweise drei Versuche für eine korrekte Eingabe der PIN zu. Im Falle einer dritten Falscheingabe sperrt die Kontrolleinrichtung 10 das Dekodiergerät 2. Insbesondere ermittelt die Kontrolleinrichtung 10, ob der Abnehmer das Freigabealter erreicht hat. Gegebenenfalls signalisiert die Kontrolleinrichtung 10 der Entschlüsselungseinrichtung eine Berechtigung zur Inanspruchnahme des Fernsehprogramms und die Entschlüsselungseinrichtung 4 entschlüsselt den Programminhalt und leitet einen Datenstrom mit diesem entschlüsselten Programminhalt an den Datenausgang 14. Von dem Datenausgang 14 gelangt der Programminhalt an das angeschlossene digitale Fernsehgerät und schließlich zur Darstellung auf dem Bildschirm des Fernsehgeräts.

Die Kontrolleinrichtung 10 legt die Dienstinformation in einem Bereich des Speichermoduls 18 ab, der dem Fernsehprogramm zugeordnet ist.

Wenn der Abnehmer mittels der Eingabetastatur 8 ein anderes Fernsehprogramm anwählt, dann ruft die Kontrolleinrichtung 10 die Dienstinformation aus dem Bereich des Speichermoduls 18 ab, der dem gewählten Fernsehprogramm zugeordnet ist, sofern diese Dienstinformation zuvor bereits darin gespeichert wurde. Anhand dieser gespeicherten Dienstinformation ermittelt die Kontrolleinrichtung 10, ob der Abnehmer zur Inanspruchnahme des gewählten Fernsehprogrammes berechtigt ist. Wenn nachfolgend - vorliegend innerhalb von zwei Sekunden - eine aktuelle Dienstinformation empfangen und an die Kontrolleinrichtung 10 geleitet wird, dann überprüft die Kontrolleinrichtung 10 in der oben beschriebenen Weise, ob die Berechtigung zur Inanspruchnahme des Fernsehprogrammes gegeben ist, und beendet erforderlichenfalls die Entschlüsselung des Fernsehprogramms.

Somit ist unter Einhaltung des Jugendschutzes gewährleistet, dass der Abnehmer bei Wahl eines Fernsehprogrammes keine Wartezeit wahrnimmt, bis dieses Fernsehprogramm auf dem Bildschirm seines an das Dekodiergerät 2 angeschlossenen Fernsehgeräts gezeigt wird.

Bei einer Ausführungsform wird die Dienstinformation jedes empfangenen Fernsehprogrammes laufend in dem Speichermodul aktualisiert, sofern die Speicherkarte in dem Kartenleser 16 für diese Fernsehprogramme registriert ist. Die Dienstinformation wird also auch dann aktualisiert, wenn der Abnehmer das zugeordnete Fernsehprogramm nicht gewählt hat. Somit nimmt der Abnehmer auch dann keine Wartezeit wahr, wenn er das Fernsehprogramm erstmalig wählt.

Bei einer Ausführungsform ist der Dienstinhalt - im Ausführungsbeispiel der Programminhalt - nicht verschlüsselt. Wenn die Karte eine Abnehmerinformation enthält, wonach der Abnehmer, für den die Karte registriert ist, das Freigabealter des gewählten Fernsehprogramms bzw. der im Rahmen des gewählten Fernsehprogramms ausgestrahlten Sendung nicht erreicht, dann blockiert oder unterdrückt die Kontrolleinrichtung oder ggf. die Entschlüsselungseinrichtung die Wiedergabe des gewählten Fernsehprogramms, so dass der Abnehmer dieses Fernsehprogramm nicht auf dem Schirm des angeschlossenen Fernsehgeräts zu sehen bekommt. Bei einer Ausführungsform weist das Dekodiergerät einen Bildgenerator (nicht dargestellt) auf, der anstelle des angewählten Programmes ein Bild auf dem Schirm des angeschlossenen Fernsehgeräts erzeugt. Somit ist ein Jugendschutz auch im Falle eines Fernsehprogramms erreichbar, dessen Inhalt unverschlüsselt übertragen wird.

## Patentansprüche

1. Freigabevorrichtung (2) zur Freigabe eines digitalen Dienstes an einen Dienstabnehmer, wobei auf einem Kanal ein erstes Datensignal mit einer Information über den digitalen Dienst und zweites Datensignal mit einem Inhalt des digitalen Dienstes von einem Dienstanbieter an die Freigabevorrichtung (2) übertragen werden, mit
- einem Eingang (6) für das erste Datensignal und für das zweite Datensignal,
- einer Wähleinrichtung (8) zum Anwählen des Kanals,
- einer Kontrolleinrichtung (10), die anhand der mittels des ersten Datensignals übertragenen Information feststellt, ob der Dienstabnehmer zur Nutzung des digitalen Dienstes berechtigt ist, der auf dem angewählten Kanal übertragen wird, und
- einem mit der Kontrolleinrichtung (10) verbundenen Datenausgang (14) zur Ausgabe der Daten des Dienstes für den Dienstabnehmer, falls der Dienstabnehmer zur Nutzung des Dienstes berechtigt ist,
**dadurch gekennzeichnet, dass** die Freigabevorrichtung (2) eine Speichereinrichtung (18) zum Speichern des ersten Datensignals des digitalen Dienstes aufweist, aus der die Kontrolleinrichtung (10) das gespeicherte erste Datensignal ausliest, wenn der Dienstabnehmer den Kanal anwählt, auf dem der digitale Dienst übertragen wird.

2. Freigabevorrichtung nach dem vorstehenden Anspruch, **gekennzeichnet durch** eine Entschlüsselungseinrichtung (4), die mit dem Datensignaleingang (6), mit der Wähleinrichtung (8) und mit der Kontrolleinrichtung (10) verbunden ist, wobei die Entschlüsselungseinrichtung (4) - falls das zweite Datensignal des gewählten Kanals verschlüsselt ist - dieses verschlüsselte zweite Datensignal entschlüsselt, wenn die Kontrolleinrichtung (10) feststellt, dass der Dienstabnehmer zur Nutzung des digitalen Dienstes berechtigt ist, der auf dem gewählten Kanal übertragen wird.

3. Freigabevorrichtung nach einem der vorstehenden Ansprüche,
**dadurch gekennzeichnet, dass** das zuletzt übertragene erste Datensignal des digitalen Dienstes in der Speichereinrichtung (18) gespeichert wird, sofern der Kanal angewählt ist, auf dem der in Anspruch genommene digitale Dienst übertragen wird.

4. Freigabevorrichtung nach einem der vorstehenden Ansprüche,
**dadurch gekennzeichnet, dass** das zuletzt übertragene erste Datensignal des digitalen Dienstes in der Speichereinrichtung (18) gespeichert wird, sofern der Dienstabnehmer zur Nutzung des digitalen Dienstes berechtigt ist.

5. Freigabevorrichtung nach einem der vorstehenden Ansprüche,
**dadurch gekennzeichnet, dass** jedes erste Datensignal des digitalen Dienstes in der Speichereinrichtung (18) nach jeder Übertragung an die Freigabevorrichtung (2) gespeichert wird.

6. Freigabevorrichtung nach einem der vorstehenden Ansprüche,
**dadurch gekennzeichnet, dass** die Kontrolleinrichtung (10) die festgestellte Berechtigung unmittelbar nach jeder Übertragung des ersten Datensignals anhand der mittels dieses ersten Datensignals übertragenen Information überprüft.

7. Verfahren zur Freigabe eines digitalen Dienstes an einen Dienstabnehmer, mit den Schritten:
- Übertragen auf einem Kanal eines ersten Datensignals mit einer Information über den digitalen Dienst und eines zweiten Datensignals mit einem Inhalt des digitalen Dienstes von einem Dienstanbieter an eine Freigabevorrichtung (2),
- Anwählen des Kanals,
- Feststellen anhand der mittels des ersten Datensignals übertragenen Information, ob der Dienstabnehmer zur Nutzung des digitalen Dienstes berechtigt ist, der auf dem angewählten Kanal übertragen wird, und
- Ausgeben der Daten des Dienstes für den Dienstabnehmer, falls der Dienstabnehmer zur Nutzung des Dienstes berechtigt ist;
**gekennzeichnet durch** die Schritte:
- Speichern des ersten Datensignals des digitalen Dienstes in einer Speichereinrichtung (18), und
- Auslesen des gespeicherten ersten Datensignals aus der Speichereinrichtung (18), wenn der Dienstabnehmer den Kanal anwählt, auf dem der digitale Dienst übertragen wird.

8. Verfahren nach dem vorstehenden Anspruch,
**gekennzeichnet durch** den Schritt:
- falls das zweite Datensignal des gewählten Kanals verschlüsselt ist, Entschlüsseln dieses verschlüsselten zweiten Datensignals, wenn feststeht, dass der Dienstanbieter zur Nutzung des digitalen Dienstes berechtigt ist, der auf dem gewählten Kanal übertragen wird.

9. Verfahren nach einem der Ansprüche 7 oder 8,
**dadurch gekennzeichnet, dass** das zuletzt übertragene erste Datensignal des digitalen Dienstes in der Speichereinrichtung (18) gespeichert wird, sofern der Kanal angewählt ist, auf dem der digitale Dienst in Anspruch genommen wird.

10. Verfahren nach dem vorstehenden Anspruch,
**dadurch gekennzeichnet, dass** das zuletzt übertragene erste Datensignal des digitalen Dienstes in der Speichereinrichtung (18) gespeichert wird, sofern der Dienstabnehmer zur Nutzung des digitalen Dienstes berechtigt ist.

11. Verfahren nach dem vorstehenden Anspruch,
**dadurch gekennzeichnet, dass** jedes erste Datensignal des digitalen Dienstes in der Speichereinrichtung (18) nach jeder Übertragung an die Freigabevorrichtung (2) gespeichert wird.

12. Verfahren nach einem der Ansprüche 7 bis 11,
**gekennzeichnet durch** den Schritt:
- Überprüfen der festgestellten Berechtigung unmittelbar nach jeder Übertragung des ersten Datensignals anhand der mittels dieses ersten Datensignals übertragenen Information.

13. System zur Inanspruchnahme eines digitalen Dienstes durch einen Dienstabnehmer, mit
- einer Empfangseinrichtung zum Empfang eines ersten Datensignals mit einer Information über den digitalen Dienst, einem zweiten Datensignal mit einem Inhalt des digitalen Dienstes,
- einer Freigabevorrichtung (2) nach einem der Ansprüche 1 bis 6 zur Freigabe des digitalen Dienstes an den Dienstabnehmer gemäß einem Verfahren nach einem der Ansprüche 7 bis 12, deren Eingang (6) mit der Empfangseinrichtung zur Aufnahme des empfangenen ersten Datensignals und des empfangenen zweiten Datensignals verbunden ist, und
- einer Kommunikationeinrichtung, die mit dem Datenausgang (14) der Freigabevorrichtung (2) verbunden ist und die die ausgegebenen Daten des Dienstes zur Kommunikation des Inhalts des digitalen Dienstes an den Dienstabnehmer verarbeitet.
